Europäisches Patentamt

European Patent Office

Office européen des brevets

(19)

(11) Veröffentlichungsnummer: **0 133 279 B1**

(12) **EUROPÄISCHE PATENTSCHRIFT**

(45) Veröffentlichungstag der Patentschrift: 24.04.91

(51) Int. Cl.⁵: **H04L 25/36, H04J 3/12**

(21) Anmeldenummer: 84108753.9

(22) Anmeldetag: 24.07.84

(54) **Verfahren zur Bitraten-Transformation von Digitalsignalen.**

(30) Priorität: 29.07.83 DE 3327380

(43) Veröffentlichungstag der Anmeldung:
20.02.85 Patentblatt 85/08

(45) Bekanntmachung des Hinweises auf die
Patenterteilung:
24.04.91 Patentblatt 91/17

(84) Benannte Vertragsstaaten:
AT DE IT

(56) Entgegenhaltungen:
DE-A- 2 006 504
DE-A- 2 740 347
DE-A- 2 922 338

PROCEEDINGS INTERNATIONAL SEMINAR
ON DIGITAL COMMUNICATIONS, Zurich, 4.-6.
März 1980, Seiten C3.1-C3.5; J. NOORDANUS
et al.: "End to end supervision of digital
radio relay sections by synchronous bit insertion with per hop bit error rate measurement and service channel facilities"

(73) Patentinhaber: Siemens Aktiengesellschaft
Wittelsbacherplatz 2
W-8000 München 2(DE)

(72) Erfinder: Kahn, Klaus-Dieter, Dipl.-Ing.
Frühlingstrasse 26
W-8034 Germering(DE)
Erfinder: Kühne, Friedrich, Dr.
Gabriele-Münter-Strasse 21
W-8000 München 71(DE)

## Beschreibung

Die Erfindung bezieht sich auf ein Verfahren zur Bitraten-Transformation von Digitalsignalen in Digital-Übertragungssystemen, bei denen im Sender Zusatzbits in das zu übertragende Digitalsignal eingeführt und im Empfänger wieder herausgenommen werden, deren Anordnung durch einen Überrahmen bestimmt ist, und zur Bitraten-Transformation im Sender und Empfänger jeweils ein Speicher mit Adressenzähler für Ein- und Auslesung sowie ein Phasenvergleicher und ein spannungesteuerter Taktoszillator vorgesehen sind und sendeseitig der Taktoszillator für den Takt zur Auslesung auf einen erhöhten Wert der Frequenz des Taktes zur Einlesung synchronisiert wird und empfangsseitig der Taktoszillator für den Takt zur Auslesung auf einen entsprechend erniedrigten Wert der Frequenz des Taktes zur Einlesung synchronisiert wird.

In Digital-Übertragungssystemen, insbesondere in Digital-Richtfunksystemen werden im Sender Zusatzbits in das zu übertragende Digitalsignal eingefügt, die im Empfänger wieder herausgenommen werden. Die Zusatzbits erfüllen systeminterne Zwecke, vor allem die Überwachung der Übertragungsqualität und die Übertragung von Hilfssignalen.

Die Anordnung der Zusatzbits wird durch einen Überrahmen definiert. Die Zusatzbits können dabei einzeln oder in Blöcken angeordnet sein. In der Zeitschrift telcom report 5 (1982) 2, Seiten 138 bis 140 ist z.B. ein Überrahmen beschrieben, in dem die Zusatzbits in Blöcken von k bit, zwischen denen sich jeweils l Informationsbits befinden, angeordnet sind. Durch die Einfügung der Zusatzbits wird die Bitrate des Digitalsignals im Verhältnis $m/n = (k+l)/l$ erhöht. Hierfür ist es erforderlich, im Sender, nach dem Einfügen der Zusatzbits, einen gleichmäßigen Takt T1 für das Digitalsignal mit der erhöhten Bitrate D1 und im Empfänger, nach Herausnahme der Zusatzbits, einen gleichmäßigen Takt T2 für das urpsrüngliche Digitalsignal D2 zu erzeugen.

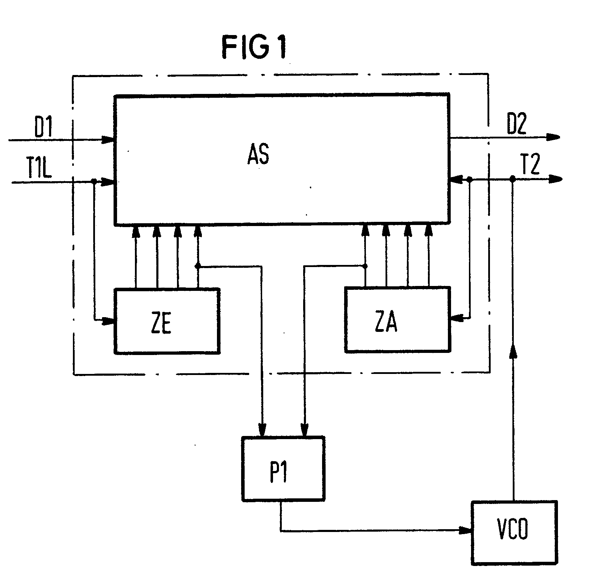

In der Zeitschrift telcom report 2 (1979) ist im Beiheft "Digital-Übertragungstechnik" Seiten 59 bis 64 ein Verfahren zur Bitraten-Transformation beschrieben, das nachfolgend anhand der Anordnung für die Empfangsseite gemäß Fig. 1 erläutert werden soll.

Die Anordnung besteht aus einem elastischen Speicher, der sich aus dem adressierbaren Speicher AS und den Adressenzählern ZE und ZA für Ein- und Auslesung zusammensetzt, sowie aus einem Phasenvergleicher P1 und einem spannungsgesteuerten Taktoszillator VC0. Das Digitalsignal D1 wird dem adressierbaren Speicher zusammen mit einem Lückentakt T1L zugeführt. Der Lückentakt T1L unterscheidet sich von dem gleichmäßigen Takt T1 dadurch, daß die den Zusatzbits entsprechenden Taktimpulse unterdrückt sind. Jeder Taktimpuls des Lückentaktes T1L schaltet den Adressenzähler um einen Schritt weiter. Der Zähler ZE ist z.B. vierstufig, das entspricht 16 möglichen Adressen (0 bis 15) und einer Speicherkapazität von 16 bit.

An seinem Ausgang gibt der Speicher AS das Digitalsignal D2 ab. Dieses wird mit dem Takt T2 abgefragt, der auch den Adressenzähler ZA steuert. Der Takt T2 wird in dem Taktoszillator VC0 erzeugt, dessen Frequenz so geregelt wird, daß der Speicher AS im zeitlichen Mittel halb gefüllt ist, d.h., daß Einlese- und Ausleseadresse sich um den Wert 8 unterscheiden. Dazu werden die Adressenausgänge jeweils der letzten Zählerstufen der Adressenzähler ZE und ZA mit den beiden Eingängen des Phasenvergleichers P1 verbunden. Der Phasenvergleicher P1 gibt an seinem Ausgang eine Regelspannung für die Regelung der Frequenz des Taktoszillators VC0 ab. Sind die Zusatzbits periodisch in Blöcken von k bit angeordnet, so schwankt die Differenz der Ein- und Ausleseadresse um ± k/2 um den zeitlichen Mittelwert. Der Phasenvergleicher P1 gibt eine Sägezahnspannung ab.

Dieses Verfahren kann mit einer modifizierten Anordnung auch auf der Sendeseite zur Erzeugung des Taktes T1 angewendet werden.

Da bei diesem Verfahren der Phasenvergleicher eine Sägezahnspannung abgibt, entsteht grundsätzlich ein systematischer Jitter des Taktes T2 (auf der Empfangsseite). Damit der Jitter einen tolerierbaren Wert nicht überschreitet, muß entweder die Blocklänge k auf ungünstig kleine Werte beschränkt werden, oder der Taktregelkreis muß mit einer ungünstig hohen Güte ausgelegt werden.

Ein Verfahren der eingangs beschriebenen Art ist im wesentlichen durch die DE 27 40 347 Al bekannt, in der eine Vorrichtung zum Einfügen und Ausblenden von Zusatzinformationen in einen bzw. aus einem digitalen Informationsstrom beschrieben wird. Dabei werden Zusatzinformationsbits in eine über einen Übertragungskanal zu übertragende Bit-Folge eingefügt und wieder ausgeblendet, zu welchem Zweck ein sendeseitiger Einfügeteil und ein empfangsseitiger Ausblendeteil vorgesehen sind. Der Einfügeteil wandelt eine ihm mit einer ersten Taktfrequenz zugeführte Eingangsbitfolge durch Einfügen von m Zusatzbits pro m. k. n bits der Eingangsbitfolge in eine Ausgangsbitfolge mit einer zweiten, entsprechend den eingefügten Zusatzbits höheren Taktfrequenz um. Der Ausblendeteil gewinnt aus der ihm mit der zweiten Taktfrequenz zugeführten sendeseitigen Ausgangsbitfolge die sendeseitige Eingangsbitfolge mit der ersten Taktfrequenz und die Zusatzinformationsbits zurück. Bei einer solchen Vorrichtung mit Ein- und Ausblendung von Impulsen tritt zwangsläufig ein Jitter auf.

Entsprechende Verfahren bzw. Vorrichtungen sind ferner durch die DE-A-2 006 504 und DE-A-2 922 338 bekannt, die ein Verfahren zum Einfügen einer äquidistanten Folge von Binärsignalen in den Pulsrahmen einer Übertragungsstrecke bzw. ein Leitungsanschlußgerät für breitbandige Übertragungsstrecken betreffen.

Der Erfindung liegt die Aufgabe zugrunde, ein Verfahren zur Erzeugung des Taktes T1 bzw. T2 bei der Bitraten-Transformation im Sender bzw. Empfänger anzugeben, bei dem kein systematischer Taktjitter auftritt.

Diese Aufgabe wird mit einem Verfahren der eingangs beschriebenen Art gemäß der Erfindung in der Weise gelöst, daß empfangsseitig aus dem Takt T1 zur Einlesung durch frequenzmäßige Teilung im Verhältnis m:1 in einem Teiler TEm ein Takt T1m und aus dem Takt T2 zum Auslesen, der im Verhältnis m/n zum Einlesetakt steht, durch frequenzmäßige Teilung im Verhältnis n:1 in einem Teiler TEn ein Takt T2n gewonnen wird und daß diese neu gewonnenen Takte T1m, T2n im Phasenvergleicher verglichen werden, der die Regelspannung zur Regelung der Frequenz des spannungsgesteuerten Taktoszillators erzeugt, und daß die Adressenzähler für Ein- und Auslesung periodisch mit der Periode des Überrahmens oder eines Vielfachen davon auf einen definierten Wert gesetzt werden.

Vorteilhafte Ausgestaltungen und Weiterbildungen des erfindungsgemäßen Verfahrens sind in den Unteransprüchen angegeben.

Nachstehend wird die Erfindung anhand von in der Zeichnung dargestellten Ausführungsbeispielen näher erläutert.

Es zeigen
Figuren 2 und 3
jeweils eine empfangsseitige Anordnung zur Durchführung des erfindungsgemäßen Verfahrens und
Figuren 4 und 5
jeweils eine sendeseitige Anordnung zur Durchführung des erfindungsgemäßen Verfahrens.

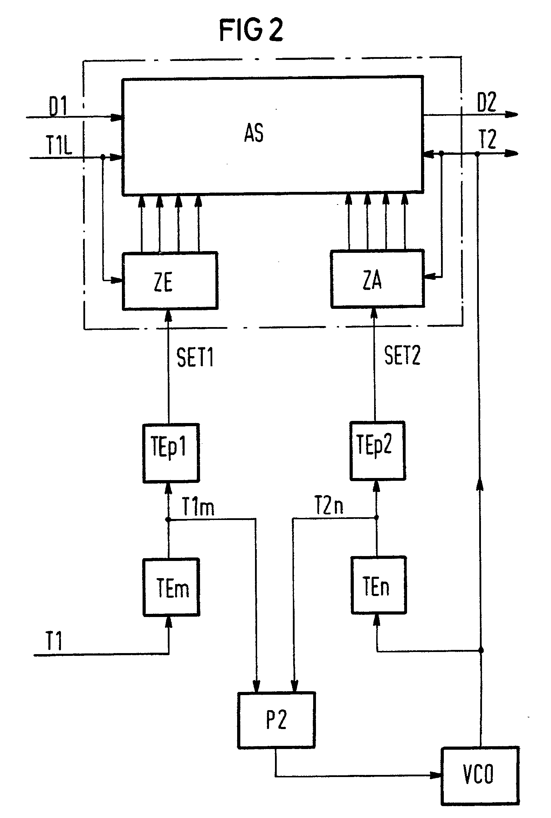

Die Anordnung nach Fig. 2 enthält einen elastischen Speicher, bestehend aus einem adressierbaren Speicher AS und den Adressenzählern ZE und ZA für Ein- und Auslesung. An den Andressenzähler ZE für die Einlesung sind hintereinanderliegend ein Teiler TEm, in dem aus dem anliegenden Takt T1 durch frequenzmäßige Teilung im Verhältnis m:1 der Takt T1m gewonnen wird, und ein Teiler TEp1, in dem aus dem Takt T1m durch frequenzmäßige Teilung im Verhältnis p:1 ein Setzimpuls SET1 abgeleitet wird, angeschaltet.

In entsprechender Weise sind an dem Adressenzähler ZA für die Auslesung ein Teiler TEn, in dem aus dem Takt T2 eines Taktoszillators VC0 durch frequenzmäßige Teilung im Verhältnis n:1 der Takt T2n gewonnen wird und ein Teiler TEp2, in dem durch frequenzmäßige Teilung im Verhältnis p:1 aus dem Takt T2n ein Setzimpuls SET2 abgeleitet wird, angeschlossen. Der Takt T2 des Taktoszillators VC0 wird zugleich direkt auf die Taktleitung des adressierbaren Speichers AS gegeben. Die in den Teilern TEm und TEn gewonnenen Takte T1m und T2n werden in einem Phasenvergleicher P2 verglichen, der die Regelspannung der Frequenz des Taktoszillators VC0 erzeugt.

Mit einer Anordnung nach Fig. 2 wird erreicht, daß kein systematischer Jitter entsteht, da die Regelspannung eine Gleichspannung ist.

Bei dem erfindungsgemäßen Verfahren ist es erforderlich, die Adressenzähler ZE und ZA beim Einschalten des Gerätes in eine definierte Anfangslage zu setzen. Dies geschieht in der Weise, daß die Adressenzähler ZE und ZA periodisch mit der Periode des Überrahmens oder eines Vielfachen davon auf einen definierten Wert gesetzt werden. Dies erfolgt mit den vorstehend bereits beschriebenen Teilern TEp1 und TEp2, in denen aus den Takten T1m und T2n durch frequenzmäßige Teilung im Verhältnis p:1 die Setzimpulse SET1 und SET2 abgeleitet werden, die die Adressenzähler ZE und ZA periodisch in eine definierte Anfangslage setzen, wobei p·m ein ganzzahliges Vielfaches sowohl der Überrahmenlänge (Anzahl der Bits) als auch der Speicherkapazität ist.

Nachdem die Adressenzähler ZE und ZA nach dem Einschalten des Gerätes in definierte Lagen gesetzt worden sind, haben die periodisch wiederholten Setzimpulse SET1, SET2 bei störungsfreiem Betrieb keinen Einfluß mehr auf die Zähler, weil diese sich zu den jeweiligen Zeitpunkten bereits in der richtigen Lage befinden. Die Anfangslagen werden so bestimmt, daß der Speicher im zeitlichen Mittel halb gefüllt ist, wie dies beim Verfahren nach dem Stand der Technik vorgesehen ist. Die mit dem Adressenzähler ZE zur Einlesung verbundenen Teiler TEm und TEp1 werden gleichzeitig zur Erkennung des Überrahmens und zur Auswertung der Zusatzbits benötigt.

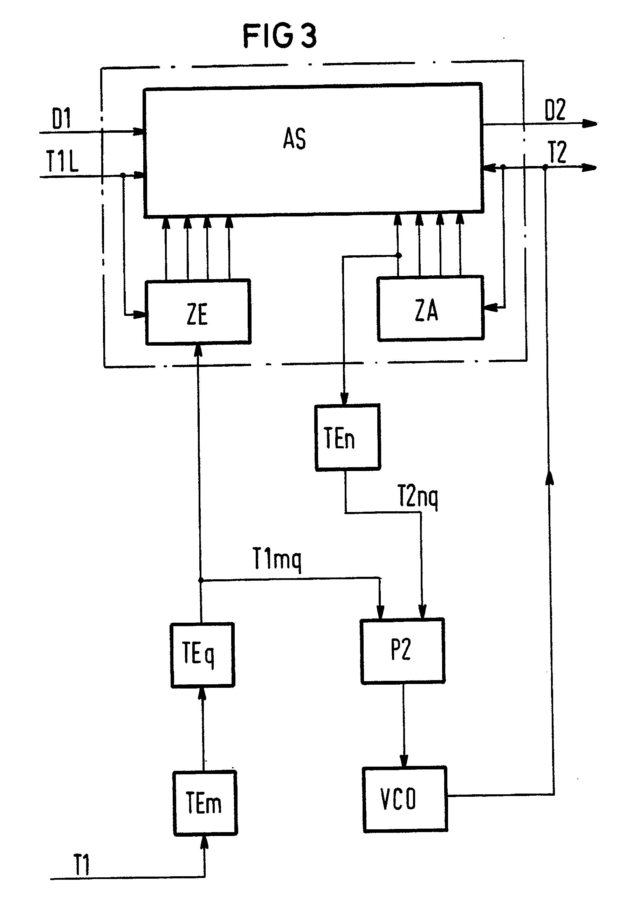

Fig. 3 zeigt eine vereinfachte Anordnung zur Durchführung des erfindungsgemäßen Verfahrens für den Fall, daß die Überrahmenlänge den Wert q·m hat, wobei q die Speicherkapazität ist. Hierbei wird aus dem Takt T1 durch frequenzmäßige Teilung im Verhältnis m·q:1 in den hintereinanderliegenden Teilern TEm und TEq der Takt T1mq gewonnen, der einerseits dem Phasenvergleicher P2 zugeführt wird und andererseits den Adressenzähler ZE zur Einlesung periodisch in eine definierte Anfangslage setzt. Aus dem Takt T2 des Taktoszillators VC0 wird durch frequenzmäßige Teilung im Verhältnis n·q: 1 in dem Adressenzähler ZA zur Auslesung und dem nachfolgenden Teiler TEn der Takt T2nq gewonnen, der ebenfalls dem Phasenvergleicher P2 zugeführt wird. Die Takte T1mq und T2nq werden in dem Phasenvergleicher P2 verglichen, der die Regelspannung zur Regelung der Frequenz des Taktoszillators VC0 erzeugt. Bei dieser Anordnung ist der Adressenzähler ZA zur Auslesung in die Teilung des Taktes T2 eingebunden und braucht deshalb nicht ersetzt zu werden.

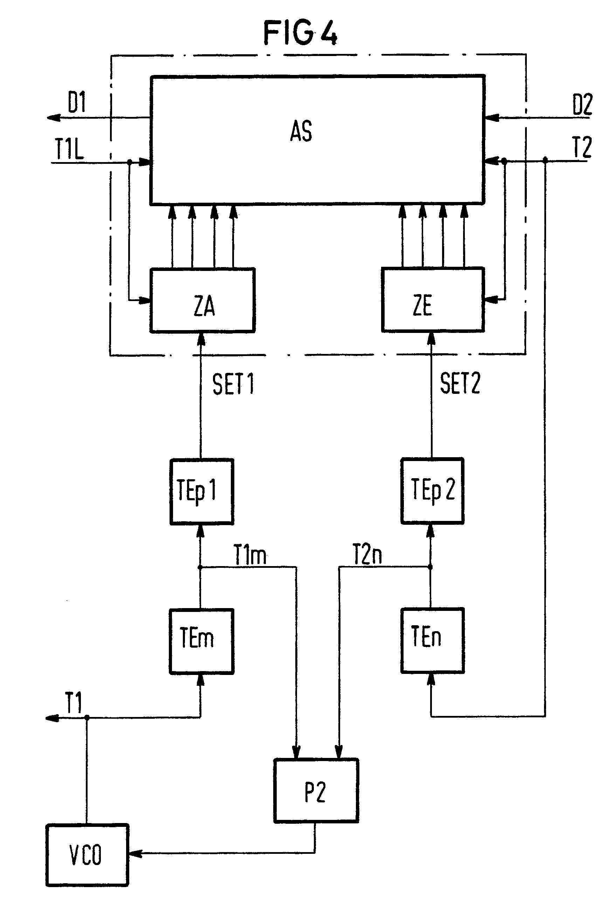

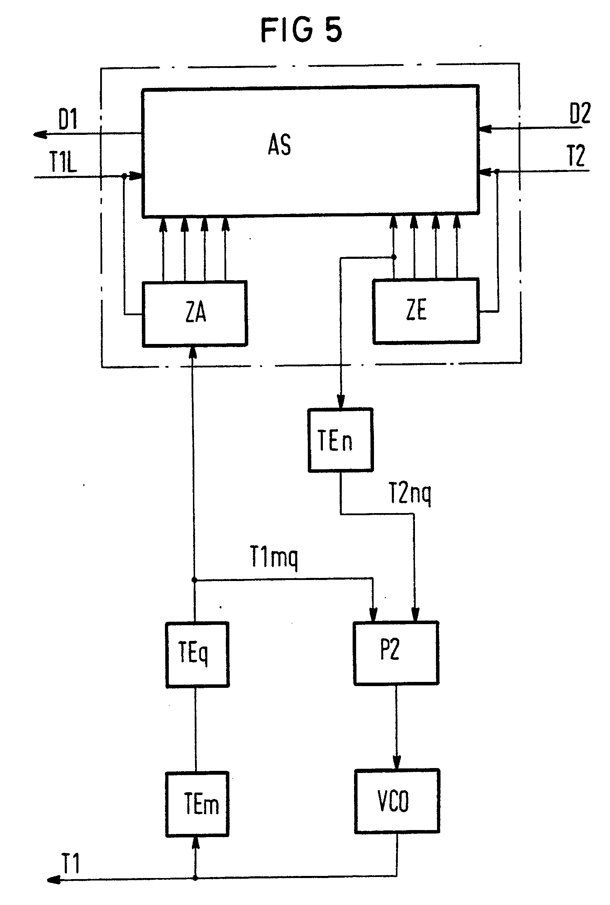

Die Figuren 4 und 5 zeigen Anordnungen zur Durchführung des erfindungsgemäßen Verfahrens für die Sendeseite, die im wesentlichen den Anordnungen nach den Figuren 2 und 3 entsprechen. Sie unterscheiden sich von den entsprechenden Anordnungen für die Empfangsseite lediglich dadurch, daß die Signalrichtung im elastischen Speicher umgekehrt ist, daß der Taktoszillator VC0 den Takt T1 erzeugt und daß die hierbei mit dem Adressenzähler ZA zur Auslesung verbundenen Teilerketten TEm und TEp1 bzw. TEm und TEq gleichzeitig die Bildung des Überrahmens steuern.

**Ansprüche**

1. Verfahren zur Bitraten-Transformation von Digitalsignalen in Digital-Übertragungssystemen, bei denen im Sender Zusatzbits in das zu übertragende Digitalsignal eingefügt und im Empfänger wieder herausgenommen werden, deren Anordnung durch einen Überrahmen bestimmt ist, und zur Bitraten-Transformation im Sender und Empfänger jeweils ein Speicher mit Adressenzählern für Ein- und Auslesung sowie ein Phasenvergleicher und ein spannungsgesteuerter Taktoszillator vorgesehen sind und sendeseitig der Taktoszillator für den Takt zur Auslesung auf einen erhöhten Wert der Frequenz des Taktes zur Einlesung synchronisiert wird und empfangsseitig der Taktoszillator für den Takt zur Auslesung auf einen entsprechend erniedrigten Wert der Frequenz des Taktes zur Einlesung synchronisiert wird, **dadurch gekennzeichnet,** daß empfangsseitig aus dem Takt (T1) zur Einlesung durch frequenzmäßige Teilung im Verhältnis m:1 in einem Teiler (TEm) ein Takt (T1m) und aus dem Takt (T2) zum Auslesen, der im Verhältnis m/n zum Einlesetakt steht, durch frequenzmäßige Teilung im Verhältnis n:1 in einem Teiler (TEn) ein Takt (T2n) gewonnen wird und daß diese neu gewonnenen Takte (T1m, T2n) im Phasenvergleicher (P2) verglichen werden, der die Regelspannung zur Regelung der Frequenz des spannungsgesteuerten Taktoszillators (VC0) erzeugt, und daß die Adressenzähler (ZE, ZA) für Ein- und Auslesung periodisch mit der Periode des Überrahmens oder eines Vielfachen davon auf einen definierten Wert gesetzt werden.

2. Verfahren nach Anspruch 1, **dadurch gekennzeichnet,** daß aus den neu gewonnenen Takten (T1m, T2n) durch frequenzmäßige Teilung im Verhältnis p:1 in weiteren Teilern (TEp1, TEp2) Setzimpulse (SET1, SET2) abgeleitet werden, die die Adressenzähler (ZE, ZA) periodisch in eine definierte Anfangslage setzen, wobei p•m ein ganzzahliges Vielfaches sowohl der Überrahmenlänge (Anzahl der Bits) als auch der Speicherkapazität ist.

3. Verfahren zur Bitraten-Transformation von Digitalsignalen in Digital-Übertragungssystemen, bei denen im Sender Zusatzbits in das zu übertragende Digitlsignal eingefügt und im Empfänger wieder herausgenommen werden, deren Anordnung durch einen Überrahmen bestimmt ist, und zur Bitraten-Transformation im Sender und Empfänger jeweils ein Speicher mit Adressenzählern für Ein- und Auslesung sowie ein Phasenvergleicher und ein spannungsgesteuerter Taktoszillator vorgesehen sind und sendeseitig der Taktoszillator für den Takt zur Auslesung auf einen erhöhten Wert der Frequenz des Taktes zur Einlesung synchronisiert wird und empfangsseitig der Taktoszillator für den Takt zur Auslesung auf einen entsprechend erniedrigten Wert der Frequenz des Taktes zur Einlesung synchronisiert wird, **dadurch gekennzeichnet,** daß bei einer Überrahmenlänge von q•m mit q als Speicherkapazität empfangsseitig aus dem Takt (T1) zur Einlesung durch frequenzmäßige Teilung im Verhältnis m• q:1 in zwei aufeinanderfolgenden Teilern (Tem, TEq) ein Takt (T1mq) und aus dem Takt (T2) zur Auslesung durch frequenzmäßige Teilung im Verhältnis n•q:1 im Adressenzähler (ZA) zur Auslesung und einem nachfolgenden Teiler (TEn) ein Takt (T2nq) gewonnen wird, und daß diese beiden Takte (T1mq, T2nq) im Phasenvergleicher (P2) verglichen werden, der die Regelspannung zur Regelung der Frequenz des Taktoszillators (VC0) erzeugt, und daß ferner der aus dem Takt (T1) zur Einlesung gewonnene Takt (T1mq) den Adressenzähler (ZE) zur Einlesung periodisch in eine definierte Ausgangslage setzt.

4. Verfahren nach einem der Ansprüche 1 bis 3, **gekennzeichnet durch** die Anwendung der Verfahrensschritte auf der Sendeseite mit umgekehrter Signalrichtung im Speicher, mit der Maßgabe, daß der Taktoszillator (VC0) den Takt (T1) zur Auslesung erzeugt.

5. Verfahren nach Anspruch 4,
**dadurch gekennzeichnet,** daß die mit dem Adressenzähler (ZE) zur Einlesung verbundenen Teiler (TEm, TEp1 bzw TEm, TEq) gleichzeitig die Bildung des Überrahmens auf der Empfangsseite steuern und die mit dem Adressenzähler (ZA) zur Auslesung verbundenen Teiler (TEM, TEp1 bzw. TEm, Teq) auf der Sendeseite.

## Claims

1. Method for bit rate transformation of digital signals in digital transmission systems, in which additional bits are inserted into the digital signal to be transmitted in the transmitter, and are removed again in the receiver, the arrangement of which is determined by a superframe, and there being provided for bit rate transformation in the transmitter and receiver in each case one memory with address counters for writing and reading as well as a phase comparator and a voltage-controlled clock oscillator, and at the transmitting end the clock oscillator for the clock for reading being synchronised with an increased frequency value of the clock for writing, and at the receiving end the clock oscillator for the clock for reading being synchronised with a correspondingly decreased frequency value of the clock for writing, characterised in that a clock (T1m) is obtained at the receiving end by frequency division in the ratio m:1 in a divider (TEm) from the clock (T1) for writing and a clock (T2n) is obtained by frequency division in the ratio n:1 in a divider (TEn) from the clock (T2) for reading, which has a ratio of m/n to the writing clock, and in that these newly obtained clocks (T1m, T2n) are compared in the phase comparator (P2) which generates the control voltage for controlling the frequency of the voltage-controlled clock oscillator (VC0), and in that the address counters (ZE, ZA) for writing and reading are periodically set to a defined value with the period of the superframe or a multiple thereof.

2. Method according to Claim 1, characterised in that setting pulses (SET1, SET2) are derived by frequency division in the ratio P:1 in further dividers (TEp1, TEp2) from the newly obtained clocks (T1m, T2n), which setting pulses set the address counters (ZE, ZA) periodically into a defined starting state, p·m being an integral multiple both of the superframe length (number of bits) and of the storage capacity.

3. Method for bit rate transformation of digital signals in digital transmission systems, in which additional bits are inserted into the digital signal to be transmitted in the transmitter, and are removed again in the receiver, the arrangement of which is determined by a superframe, and there being provided for bit rate transformation in the transmitter and receiver in each case one memory with address counters for writing and reading as well as a phase comparator and a voltage-controlled clock oscillator, and at the transmitting end the clock oscillator for the clock for reading being synchronised with an increased value of the frequency of the clock for writing, and at the receiving end the clock oscillator for the clock for reading being synchronised with a correspondingly decreased value of the frequency of the clock for writing, characterised in that in the case of a superframe length of q·m where q is the storage capacity, a clock (T1mq) is obtained at the receiving end by frequency division in the ratio m.q:1 in two successive dividers (Tem, TEq) from the clock (T1) for writing, and a clock (T2nq) is obtained by frequency division in the ratio n.q:1 in the address counter (ZA) for reading and a subsequent divider (TEn) from the clock (T2) for reading, and in that these two clocks (T1mq, T2nq) are compared in the phase comparator (P2) which generates the control voltage for controlling the frequency of the clock oscillator (VC0), and in that furthermore the clock (T1mq) obtained from the clock (T1) for writing periodically sets the address counter (ZE) for writing into a defined starting state.

4. Method according to one of Claims 1 to 3, characterised in that by the use of the method steps at the transmitting end with reverse signal direction in the memory, with the measure that the clock oscillator (VC0) generates the clock (T1) for reading.

5. Method according to Claim 4, characterised in that the dividers (TEm, TEp1 or TEm, TEq) connected to the address counter (ZE) for writing simultaneously control the formation of the superframe at the receiving end, and the dividers (TEM, TEp1 or TEm, Teq) connected to the address counter (ZA) for reading control the same at the transmitting end.

## Revendications

1. Procédé pour transformer la cadence binaire de signaux numériques dans des systèmes de transmission numérique, dans lesquels, dans l'émetteur, des bits supplémentaires sont insérés dans le signal numérique devant être transmis, et en sont à nouveau extraits dans le récepteur, la disposition de ces bits étant déterminée par une trame de rang supérieur, et dans lesquels, pour la transformation de la cadence binaire, il est prévu dans l'émetteur et dans le récepteur respectivement une mémoire comportant des compteurs d'adresses pour la mémorisation et la lecture ainsi qu'un comparateur de phase et un oscillateur commandé par la tension, délivrant une cadence, et, sur le côté émission, l'oscillateur délivrant la cadence de lecture est synchronisé sur une valeur accrue de la fréquence de la cadence d'enregistrement et, sur le côté réception, l'oscillateur délivrant la cadence de lecture est synchronisé sur une valeur réduite correspondante de la fréquence de la cadence d'enregistrement, caractérisé par le fait que, sur le côté réception, une cadence ($T1m$) est obtenue à partir de la cadence d'enregistrement ($T1$), au moyen d'une division de la fréquence dans le rapport $m:1$ dans un diviseur ($TEm$) et qu'une cadence ($T2n$) est obtenue à partir de la cadence de lecture ($T2$), qui est dans le rapport $m/n$ avec la cadence d'enregistrement, au moyen d'une division de la fréquence dans le rapport $n:1$ dans un diviseur ($TEn$), et que ces cadences nouvellement obtenues ($T1m,T2n$) sont comparées dans le comparateur de phase ($P2$), qui produit la tension de régulation servant à régler la fréquence de l'oscillateur commandé par la tension ($VC0$) délivrant la cadence, et que les compteurs d'adresses ($ZE,ZA$) pour l'enregistrement et la lecture sont réglés de façon périodique, conformément à la période de la trame de rang supérieur ou à un multiple de cette période, sur une valeur définie.

2. Procédé suivant la revendication 1, caractérisé par le fait qu'à partir des cadences nouvellement obtenues ($T1m,T2n$) sont dérivées, par division de fréquence dans le rapport $p:1$ dans d'autres diviseurs ($TEp1,TEp2$), des impulsions de positionnement ($SET1,SET2$), qui positionnent périodiquement les compteurs d'adresses ($ZE,ZA$) dans une position initiale définie, $p.m$ étant égal à un multiple entier aussi bien de la longueur de la trame de rang supérieur (nombre des bits) que de la capacité de mémoire.

3. Procédé pour transformer la cadence binaire de signaux numériques dans des systèmes de transmission numérique, dans lesquels, dans l'émetteur, des bits supplémentaires sont insérés dans le signal numérique devant être transmis et en sont à nouveau extraits dans le récepteur, la disposition de ces bits étant déterminée par une trame de rang supérieur, et dans lesquels, pour la transformation de la cadence binaire, il est prévu dans l'émetteur et dans le récepteur respectivement une mémoire comportant des compteurs d'adresses pour la mémorisation et la lecture ainsi qu'un comparateur de phase et un oscillateur commandé par la tension, délivrant une cadence, et, sur le côté émission, l'oscillateur délivrant la cadence de lecture est synchronisé sur une valeur accrue de la fréquence de la cadence d'enregistrement et, sur le côté réception, l'oscillateur délivrant la cadence de lecture est synchronisé sur une valeur réduite correspondante de la fréquence de la cadence d'enregistrement, caractérisé par le fait que dans le cas d'une longueur de trame de rang supérieur égale à $q.m$, $q$ étant la capacité de mémoire, côté réception, une cadence ($T1mq$) est obtenue à partir de la cadence d'enregistrement ($T1$) par division de fréquence dans le rapport $m.q:1$ dans deux diviseurs successifs ($TEm,TEq$), et qu'une cadence ($T2nq$) est obtenue à partir de la cadence de lecture ($T2$) par division de fréquence dans le rapport $n.q:1$ dans le compteur d'adresses ($ZA$) pour la lecture et dans un diviseur ($TEn$) branché en aval, et que ces deux cadences ($T1mq,T2nq$) sont comparées dans le comparateur de phase ($P2$), qui produit la tension de régulation servant à régler la fréquence de l'oscillateur ($VC0$) délivrant la cadence, et qu'en outre la cadence ($T1mq$) obtenue à partir de la cadence d'enregistrement ($T1$) positionne le compteur d'adresses de lecture ($ZE$) périodiquement dans une position initiale définie.

4. Procédé suivant l'une des revendications 1 à 3, caractérisé par l'utilisation des étapes opératoires sur le côté émission avec une direction inversée des signaux dans la mémoire, avec le fait que l'oscillateur ($VC0$) délivrant la cadence produit la cadence de lecture ($T1$).

5. Procédé suivant la revendication 4, caractérisé par le fait que les diviseurs ($TEm,TEp1$ ou $TEm,TEq$) reliés au compteur d'adresses de lecture ($ZE$) commandent simultanément la formation de la trame de rang supérieur sur le côté émission et que les diviseurs ($TEM,TEp1$ ou $TEm,Teq$) reliés au compteur d'adresses de lecture ($ZA$) commandent l'information de la trame de rang supérieur sur le côté émission.

# FIG 1

## FIG 2

# FIG 3

**EP 0 133 279 B1**

# FIG 4

11

# FIG 5